# EUROPÄISCHE PATENTSCHRIFT

(11) **EP 3 072 250 B1**
(45) Veröffentlichungstag und Bekanntmachung des Hinweises auf die Patenterteilung: **31.01.2018**
(21) Anmeldenummer: 15763254.8
(22) Anmeldetag: 04.09.2015
(51) Int. Cl.: H04J 3/06, H04L 12/40

(54) **KOMMUNIKATIONSEINRICHTUNG, KOMMUNIKATIONSSYSTEM UND VERFAHREN ZUM SYNCHRONISIERTEN SENDEN VON TELEGRAMMEN**
COMMUNICATION DEVICE, COMMUNICATION SYSTEM AND METHOD FOR THE SYNCHRONISED SENDING OF MESSAGES
DISPOSITIF DE COMMUNICATION, SYSTÈME DE COMMUNICATION ET PROCÉDÉ DE TRANSMISSION SYNCHRONISÉE DE TÉLÉGRAMMES

(30) Priorität: 08.09.2014 DE 102014112901
(43) Veröffentlichungstag der Anmeldung: 28.09.2016
(73) Patentinhaber: Phoenix Contact GmbH & Co. KG, 32825 Blomberg (DE)
(72) Erfinder: ROTTER, Christoph, 31840 Hessisch Oldendorf (DE); DETERT, Volker, 32278 Kirchlengern (DE)
(74) Vertreter: Blumbach · Zinngrebe Patent- und Rechtsanwälte
(86) Internationale Anmeldenummer: PCT/EP2015/070208
(87) Internationale Veröffentlichungsnummer: WO 2016/037932

(56) Entgegenhaltungen:
- EP-A1- 2 568 631
- "Intel Ethernet Controller I210 Family", , 1. Januar 2012 (2012-01-01), Seiten 1-6, XP055225114, Gefunden im Internet: URL:http://www.intel.com/content/dam/www/p ublic/us/en/documents/product-briefs/i210- ethernet-controller-family-brief.pdf [gefunden am 2015-11-02]

## Beschreibung

Die Erfindung betrifft eine Kommunikationseinrichtung zum synchronisierten Senden von Telegrammen, ein Kommunikationssystem mit einer solchen Kommunikationseinrichtung sowie ein Verfahren zum synchronisierten Senden von Telegrammen.

Im Umfeld automatisiert gesteuerter Prozesse und industrieller Netzwerke gelten hohe Anforderungen bezüglich der Echtzeitfähigkeit der Kommunikation zwischen den einzelnen Netzwerk- bzw. Kommunikationsteilnehmern (nachfolgend kurz Teilnehmer genannt), unabhängig davon, ob das jeweilige Kommunikationssystem auf klassischen Feldbustechnologien oder auf industriellen Ethernet-Technologien (engl.: Industrial Ethernet) basiert. Ein wesentlicher Aspekt zur Erfüllung der Echtzeitanforderungen ist die Sicherstellung einer zeitgenauen zyklischen Kommunikation. Beispielsweise bekommt dabei zum einen jeder Teilnehmer einen Zeitabschnitt (engl.: time slot) zugeordnet, in dem er eine begrenzte Anzahl an Daten übertragen darf. Zum anderen wird jeder Kommunikationszyklus in Zeitabschnitte zur Übertragung von Echtzeitdaten und in Zeitabschnitte zur Übertragung von Nicht-Echtzeitdaten unterteilt, um die gegenseitige Beeinflussung der beiden Datenklassen zu verhindern. Ein weiterer wesentlicher Aspekt ist eine präzise Zeitsynchronisation der Kommunikationsteilnehmer. Dazu können spezielle Protokolle wie zum Beispiel das "Simple Network Transport Protocol" (SNTP, gemäß RFC4330) oder das "Precision Time Protocol" (PTP, gemäß IEEE1588) eingesetzt werden, die für Zeitsynchronisation von im Netzwerk verteilter Uhren vorgesehen sind. Als weiteres Protokoll zur Zeitsynchronisation ist das "Precision Transparent Clock Protocol" (PTCP, gemäß IEC61158) zu nennen, welches zum Beispiel bei PROFINET-basierten Kommunikationssystemen eingesetzt wird.

Gemäß PTCP sind die Uhren der Teilnehmer in einer Master-Slave-Hierarchie organisiert, wobei die Synchronisation der Uhren durch den Austausch verschiedener PTCP-Telegramme erfolgt. Dabei sind gemäß PTCP vier Telegrammtypen definiert, die ein hoch genaues Ermitteln der Sendezeitpunkte der jeweiligen Telegramme erfordern. Generiert werden diese PTCP-Telegramme von vier verschiedenen PTCP-Modulen bzw. -Zustandsmaschinen, die in der Applikationsschicht implementiert sind. Im Einzelnen handelt es sich dabei um Synchronisationstelegramme der PTCP-Master-Protocol-Machine oder der PTCP-Slave-Protocol-Machine sowie um Anfragetelegramme der Line-Delay-Request-Protocol-Machine und Antworttelegramme der Line-Delay-Response-Protocol-Machine. Diese Telegramme werden durch die PTCP-Module unabhängig voneinander und asynchron zueinander erzeugt und können somit auch gleichzeitig zum Versenden bereitstehen. Bei den Synchronisationstelegrammen der PTCP-Master-Protocol-Machine und PTCP-Slave-Protocol-Machine werden die ermittelten Sendezeitpunkte direkt in das Telegramm eingeschrieben und mit diesem versendet. Bei den Anfragetelegrammen der Line-Delay-Request-Protocol-Machine und Antworttelegrammen der Line-Delay-Response-Protocol-Machine hingegen werden die ermittelten Sendezeitpunkte zurück gelesen und erst mit einem Folgetelegramm versendet.

Bislang waren für das Versenden solcher Telegramme und das hoch genaue Ermitteln und Zuordnen der Sendezeitpunkte spezielle Hardware erforderlich. Netzwerkcontroller für den Einsatz in industriellen Netzwerken, die über eine hinreichend genaue in Hardware implementierte Zeitstempeleinheit verfügen, sind zum Beispiel unter den Produktnamen "ERTEC" von SIEMENS, "NETX" von Hilscher oder "TPS-1" von Renesas/Phoenix Contact erhältlich. Solche speziellen Netzwerkcontroller sind jedoch sehr teuer, insbesondere im Vergleich zu herkömmlichen Netzwerkcontrollern aus dem PC-Bereich, die für den Einsatz in privaten Netzwerken oder Büronetzwerken vorgesehen sind.

Seit einiger Zeit sind aber Netzwerkcontroller auf dem Markt, welche aus preisgünstigen Standard-Komponenten aus dem PC-Bereich hergestellt sind und sich trotzdem auch für den Einsatz in industriellen Netzwerken eignen sollen. Beispielsweise gibt es von Intel einen solchen Netzwerkcontroller mit dem Produktnamen "I210" seit Ende des Jahres 2012, der beispielsweise in dem Dokument "Intel Ethernet Controller I210 Family", 1. Januar 2012, Seiten 1-6, XP055225114 beschrieben wird.

Untersuchungen der Anmelderin haben ergeben, dass solche preisgünstigen Netzwerkcontroller grundsätzlich auch für den Einsatz in industriellen Ethernet-basierten Kommunikationssystemen wie zum Beispiel gemäß PROFINET geeignet sein können und auch den oben bereits erwähnten Echtzeitanforderungen wie zum Beispiel gemäß PROFINET-RT (engl.: real time, RT) und PROFINET-IRT (engl.: isochronous real time, IRT) genügen können. Insbesondere kann ein Netzwerkcontroller wie der "I210" auch hinreichend genau Sendezeitpunkte ermitteln, um das PTCP-Protokoll damit implementieren zu können.

Ein wesentliches Problem stellt dabei jedoch dar, dass ein preisgünstiger Netzwerkcontroller aus dem PC-Bereich, wie etwa der "I210", nur jeweils einen ermittelten Sendezeitpunkt, nämlich den jeweils aktuellen Sendezeitpunkt speichern kann. Das heißt, ein neu ermittelter Sendezeitpunkt überschreibt den gespeicherten zuvor ermittelten Sendezeitpunkt. Aufgrund dieser Limitierung können Sendezeitpunkte verloren gehen und eine zuverlässige Zuordnung ermittelter Sendezeitpunkte zu gesendeten Telegrammen, die von verschiedenen Applikationsmodulen stammen ist somit nicht möglich. Insbesondere mit Blick auf PTCP ist es mit Netzwerkcontrollern wie dem "I210" also nicht möglich, zuverlässig die ermittelten Sendezeitpunkte den gesendeten Telegrammen verschiedener PTCP-Module zuzuordnen.

Aus der EP 2 568 631 A1 ist ein Verfahren zur Übertragung von Synchronisationsnachrichten in einem Kommunikationsnetz bekannt. Die Synchronisationsnachrichten werden ausgehend von einem ersten Knoten an einen zweiten Knoten übertragen und dienen zur Zeitsynchronisation der internen Uhr des zweiten Knoten. Jede Synchronisationsnachricht enthält eine Zeitinformation, die im zweiten Knoten basierend auf eine Verzögerungszeit auf den Sendezeitpunkt der Synchronisationsnachricht aktualisiert wird.

Eine der Erfindung zugrundeliegende Aufgabe besteht somit darin, eine Möglichkeit aufzuzeigen, wie ein preisgünstiger Netzwerkcontroller, wie zum Beispiel der "I210", der nur einen einzigen Sendezeitpunkt speichern kann, auch dann noch einsetzbar ist, wenn Telegramme mehrerer Applikationsmodule synchronisiert gesendet und deren Sendezeitpunkte zuverlässig ermittelt werden müssen, so dass insbesondere auch ein Einsatz in industriellen Netzwerken möglich ist.

Erfindungsgemäß wird diese Aufgabe gelöst durch eine Kommunikationseinrichtung mit den Merkmalen nach Anspruch 1 sowie durch ein Kommunikationssystem mit den Merkmalen nach Anspruch 9 und ein Verfahren mit den Merkmalen nach Anspruch 11.

Die erfindungsgemäße Kommunikationseinrichtung zum synchronisierten Senden von Telegrammen umfasst wenigstens zwei Applikationseinrichtungen, die jeweils dazu ausgebildet sind, wenigstens ein Telegramm bereitzustellen, wobei diese wenigstens zwei Telegramme synchronisiert gesendet werden sollen. Ferner umfasst die Kommunikationseinrichtung eine Sendeeinrichtung und eine Koordinationseinrichtung. Die Koordinationseinrichtung ist dazu ausgebildet, die von den Applikationseinrichtungen bereitgestellten Telegramme in vorbestimmbarer Weise an die Sendeeinrichtung weiterzugeben und die Sendeeinrichtung zum Senden der zu senden Telegramme zu veranlassen. Die Sendeeinrichtung weist eine Zeitstempeleinheit und eine Speichereinheit auf, wobei die Zeitstempeleinheit dazu ausgebildet ist, zu jedem versandten Telegramm, welches von einer der beiden Applikationseinrichtungen bereitgestellt wurde, einen aktuellen Sendezeitpunkt zu ermitteln, und wobei die Speichereinheit dazu ausgebildet ist, nur den aktuellen, von der Zeitstempeleinheit ermittelten Sendezeitpunkt zu speichern. Die Koordinationseinrichtung ist ferner dazu ausgebildet, den aktuellen Sendezeitpunkt aus der Speichereinheit auszulesen und dem jeweiligen Telegramm zuzuordnen. Vor allem aber ist die Koordinationseinrichtung dazu ausgebildet, die Sendeeinrichtung erst dann zu veranlassen, ein weiteres zu sendendes Telegramm zu senden, wenn der aktuelle Sendezeitpunkt von der Koordinationseinrichtung aus der Speichereinheit ausgelesen worden ist.

Die erfindungsgemäße Kommunikationseinrichtung und insbesondere deren Koordinationseinrichtung bieten viele Vorteile. So ist es möglich, dass die Sendeeinrichtung, die Speichereinrichtung und/oder die Zeitstempeleinheit auch Komponenten eines preisgünstigen Netzwerkcontrollers wie zum Beispiel dem "I210" sein können, wobei trotzdem die zuverlässige Zuordnung der Sendezeitpunkte zu den gesendeten Telegrammen der verschiedenen Applikationseinrichtungen gewährleistet ist.

Gemäß einem weiteren vorteilhaften Aspekt der Erfindung ist die Koordinationseinrichtung zweckmäßiger Weise dazu ausgebildet, den jeweiligen Sendezeitpunkt und eine Kennung des dem jeweiligen Sendezeitpunkt zugeordneten Telegramms der jeweilige Applikationseinrichtung bereit zu stellen, welche das zugeordnete Telegramm bereitgestellt hat.

Gemäß einem weiteren vorteilhaften Aspekt der Erfindung ist die Koordinationseinrichtung dazu ausgebildet, gemäß einem Kommunikationsprotokoll zyklisch zu arbeiten und insbesondere die Speichereinheit zyklisch zu vorbestimmten Zeitpunkten auszulesen.

Gemäß einem weiteren vorteilhaften Aspekt der Erfindung sind die Applikationseinrichtungen dazu ausgebildet, Telegramme zeitlich unabhängig und/oder unabhängig voneinander bereitzustellen. Insbesondere ist gemäß einem weiteren Aspekt der Erfindung wenigstens eine der Applikationseinrichtungen als eine Zustandsmaschine ausgebildet, die wenigstens ein zu sendendes Telegramm gemäß dem "Precision Transparent Clock Protocol" (PTCP) bereitstellen kann. Es lässt sich somit also auch das PTCP-Protokoll implementieren, da es sich bei den verschiedenen Applikationseinrichtungen beispielsweise um die oben erwähnten PTCP-Module handeln kann, welche PTCP-Telegramme erzeugen.

Gemäß einem weiteren vorteilhaften Aspekt der Erfindung ist die Koordinationseinrichtung dazu ausgebildet, die von den Applikationseinrichtungen bereitgestellten Telegramme zu priorisieren.

Insbesondere ist gemäß einem weiteren Aspekt der Erfindung die Koordinationseinrichtung ferner dazu ausgebildet, die Telegramme gemäß deren Priorität an die Sendeeinrichtung weiterzugeben und/oder die Sendeeinrichtung zu veranlassen, die Telegramme gemäß deren Priorität zu versenden.

Gemäß einem weiteren vorteilhaften Aspekt der Erfindung ist die Koordinationseinrichtung dazu ausgebildet, die Sendeeinrichtung auch dann zu veranlassen, ein weiteres Telegramm zu senden, wenn der aktuelle Sendezeitpunkt von der Koordinationseinrichtung aus der Speichereinheit nicht auslesbar war und insbesondere nach einer vorbestimmten Zeitspanne oder einer vorbestimmten Anzahl von Zyklen nicht auslesbar war. Dadurch wird einem Blockieren der Sendeeinrichtung vorgebeugt.

Das erfindungsgemäße Kommunikationssystem umfasst ein Übertragungsmedium und wenigstens eine an das Übertragungsmedium angeschaltete erfindungsgemäße Kommunikationseinrichtung, die wie zuvor beschrieben und insbesondere gemäß wenigstens einem der beschriebenen weiteren vorteilhaften Aspekte ausgebildet ist.

Gemäß einem weiteren vorteilhaften Aspekt der Erfindung ist das Kommunikationssystem für eine zyklische Kommunikation gemäß einem Kommunikationsprotokoll und insbesondere gemäß Profinet-RT oder Profinet-IRT ausgebildet. Dabei ist die Koordinationseinrichtung der erfindungsgemäßen Kommunikationseinrichtung dazu ausgebildet, gemäß dem Kommunikationsprotokoll des Kommunikationssystems zyklisch zu arbeiten und insbesondere die Speichereinheit zyklisch zu vorbestimmten Zeitpunkten auszulesen.

Das erfindungsgemäße Verfahren zum synchronisierten Senden von Telegrammen, wird insbesondere mittels einer erfindungsgemäßen Kommunikationseinrichtung durchgeführt, die wie zuvor beschrieben und insbesondere gemäß wenigstens einem der beschriebenen weiteren vorteilhaften Aspekte ausgebildet ist, wobei diese Kommunikationseinrichtung zweckmäßiger Weise an ein Übertragungsmedium angeschaltet und Teil eines erfindungsgemäßen zuvor beschriebenen Kommunikationssystems ist. Dieses Verfahren umfasst dabei die folgenden Schritte:
a) Bereitstellen, in einer Kommunikationseinrichtung, von wenigstens zwei Telegrammen, welche synchronisiert gesendet werden sollen;
b) Übergeben der Telegramme an eine Sendeeinrichtung der Kommunikationseinrichtung;
c) Senden des einen Telegramms von der Sendeeinrichtung;
d) Erzeugen, in der Sendeeinrichtung, eines Sendezeitpunktes für das eine Telegramm;
e) Speichern des Sendezeitpunktes in der Sendeeinrichtung, welche nur einen einzigen Sendezeitpunkt speichern kann;
f) Auslesen des gespeicherten Sendezeitpunktes und
g) Zuordnen des ausgelesenen Sendezeitpunktes zu dem einen Telegramm und Ablegen der Zuordnung in der Kommunikationseinrichtung;
h) nach dem Auslesen des Sendezeitpunktes Wiederholen der Schritte c) bis g), wobei
in Schritt c) das andere Telegramm gesendet wird,
in Schritt d) ein Sendezeitpunkt für das andere Telegramm erzeugt wird,
in Schritt e) der Sendezeitpunkt in der Sendeeinrichtung gespeichert wird,
in Schritt f) der gespeicherte Sendezeitpunkt ausgelesen wird, und
in Schritt g) der ausgelesene Sendezeitpunkt dem einen anderen Telegramm zugeordnet wird und die Zuordnung in der Kommunikationseinrichtung abgelegt wird.

Das erfindungsgemäße Verfahren bietet ebenfalls viele Vorteile. So ist es insbesondere aufgrund der Verfahrensschritte f), g) und h) möglich, dass als Sendeeinrichtung auch ein preisgünstiger Netzwerkcontroller wie zum Beispiel der "I210" eingesetzt werden kann, wobei trotzdem die zuverlässige Zuordnung der Sendezeitpunkte zu den gesendeten Telegrammen der verschiedenen Applikationseinrichtungen gewährleistet ist.

Diese Aufzählung der Verfahrensschritte stellt dabei nur eine bevorzugte jedoch nicht zwingend chronologische Reihenfolge dar. Andere Reihenfolgen der Schritte sowie das Einfügen weiterer Schritte sind möglich.

Gemäß einem weiteren vorteilhaften Aspekt der Erfindung werden in Schritt a) die Telegramme asynchron bereitgestellt. Insbesondere werden gemäß einem weiteren vorteilhaften Aspekt in Schritt a) die Telegramme von einer ersten und/oder zweiten Applikationseinrichtung bereitgestellt, wobei in Schritt g) der jeweilige Sendezeitpunkt und eine Kennung des dem jeweiligen Sendezeitpunkt zugeordneten Telegramms an die Applikationseinrichtung, welche das zugeordnete Telegramm bereitgestellt hat, übergeben werden.

Gemäß einem weiteren vorteilhaften Aspekt der Erfindung ist vorgesehen, dass in Schritt b) die Telegramme zunächst an eine Koordinationseinrichtung der Kommunikationseinrichtung und von dieser an die Sendeeinrichtung übergeben werden und/oder dass die Schritte f) und g) durch eine Koordinationseinrichtung gesteuert werden.

Gemäß einem weiteren vorteilhaften Aspekt der Erfindung wird der Schritt h) für jedes weitere Telegramm, das synchronisiert gesendet werden soll, durchgeführt. Insbesondere werden gemäß einem weiteren vorteilhaften Aspekt zumindest die Schritte c) bis g) gemäß einem Kommunikationsprotokoll zyklisch durchgeführt.

Gemäß einem weiteren vorteilhaften Aspekt der Erfindung werden in Schritt b) die Telegramme priorisiert, wobei ferner in Schritt b) das Übergeben der Telegramme und/oder in Schritt c) das Senden der Telegramme gemäß deren Priorität gesteuert wird.

Diese und weitere Merkmale und Vorteile der Erfindung ergeben sich auch aus der folgenden Beschreibung von Ausführungsbeispielen in Zusammenhang mit den beiliegenden Zeichnungen. Es zeigt dabei
- Figur 1: eine schematische Darstellung einer Kommunikationseinrichtung gemäß einer Ausführungsform der Erfindung, und
- Figur 2: eine schematische Darstellung eines Kommunikationssystems gemäß einer Ausführungsform der Erfindung.

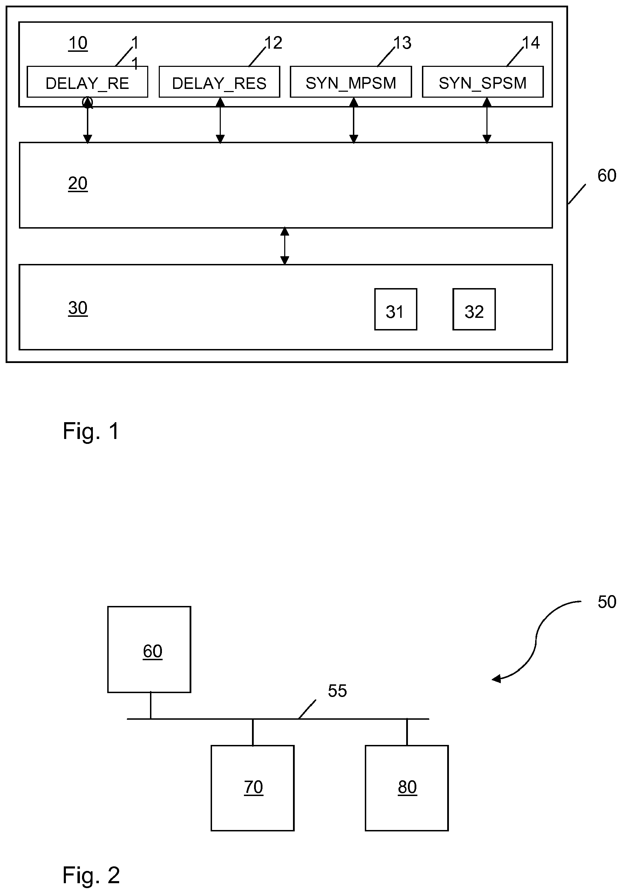

In der Figur 1 ist eine Kommunikationseinrichtung 60 gemäß einer bevorzugten Ausführungsform der Erfindung rein schematisch dargestellt. Die Kommunikationseinrichtung 60 kann als Busteilnehmer ausgebildet sein, welcher Telegramme an andere Kommunikationseinrichtungen senden und Telegramme von anderen Kommunikationseinrichtungen empfangen kann. Die Kommunikationseinrichtung 60 umfasst innerhalb einer Applikationsschicht 10 vier Applikationseinrichtungen 11, 12, 13, 14, die jeweils dazu ausgebildet sind, Telegramme zu erzeugen und bereitzustellen, die synchronisiert gesendet werden sollen, wobei das Bereitstellen der Telegramme sowohl unabhängig voneinander als auch zeitlich unabhängig also im Wesentlichen asynchron erfolgt. Ferner besitzt die Kommunikationseinrichtung 60 eine Sendeeinrichtung 30 und eine Koordinationseinrichtung 20. Die Koordinationseinrichtung 20 ist dazu ausgebildet, die von den Applikationseinrichtungen 11, 12, 13, 14 bereitgestellten Telegramme in vorbestimmbarer Weise an die Sendeeinrichtung 30 weiterzugeben und die Sendeeinrichtung 30 zum Senden der zu senden Telegramme zu veranlassen. Die Koordinationseinrichtung 20 kann als Software-basierte Treiberschicht ausgebildet sein. Dazu kann in einer Speichereinrichtung der Kommunikationseinrichtung 60 ein entsprechender Programmcode gespeichert sein, welcher von einer Steuereinrichtung der Kommunikationseinrichtung 60 ausführbar bzw. abarbeitbar ist, wobei die Steuereinrichtung zum Beispiel einen Controller oder Prozessor umfasst. In der Figur 1 sind die Speicher- und die Steuereinrichtung der Kommunikationseinrichtung 60 jedoch nicht dargestellt. Die Koordinationseinrichtung 20 kann jedoch auch selbst eine Speicher- und/oder Steuereinrichtung aufweisen.

Die Sendeeinrichtung 30 weist eine Zeitstempeleinheit 31 und eine Speichereinheit 32 auf, wobei die Zeitstempeleinheit 31 dazu ausgebildet ist, zu jedem zu versendenden Telegramm, welches von einer der Applikationseinrichtungen 11, 12, 13, 14 bereitgestellt wird und von der Koordinationseinrichtung 20 an die Sendeeinrichtung 30 weitergegeben wird, einen Sendezeitpunkt zu ermitteln. Die Speichereinheit 32 der Sendeeinrichtung 30 ist dazu ausgebildet, einen einzigen Sendezeitpunkt zu speichern und insbesondere nur den aktuellen, von der Zeitstempeleinheit 31 zuletzt ermittelten Sendezeitpunkt zu speichern. Die Sendeeinrichtung 30, die Zeitstempeleinheit 31 und die Speichereinheit 32 können Bestandteile einer Netzwerkkarte bzw. eines Netzwerkcontrollers sein. Einen solchen Netzwerkcontroller gibt es zum Beispiel von Intel mit dem Produktnamen "I210".

Die Koordinationseinrichtung 20 ist ferner dazu ausgebildet, den aktuellen Sendezeitpunkt aus der Speichereinheit 32 auszulesen und ihn dem jeweiligen Telegramm zuzuordnen, für das der Sendezeitpunkt von der Zeitstempeleinheit 31 ermittelt worden ist. Vor allem aber ist die Koordinationseinrichtung 20 dazu ausgebildet, die Sendeeinrichtung 30 erst dann zu veranlassen bzw. anzusteuern, ein weiteres zu sendendes Telegramm zu senden, wenn der aktuelle Sendezeitpunkt von der Koordinationseinrichtung 20 aus der Speichereinheit 32 ausgelesen worden ist. Dadurch ist sicher ausgeschlossen, dass ein Sendezeitpunkt, der noch nicht aus der Speichereinheit 32 ausgelesen wurde, aufgrund des Überschreibens mit einem weiteren Sendezeitstempel verloren geht.

Ferner ist die Koordinationseinrichtung 20 hier dazu ausgebildet, den jeweiligen Sendezeitpunkt und eine Kennung des dem jeweiligen Sendezeitpunkt zugeordneten Telegramms an die jeweilige Applikationseinrichtung 11, 12, 13, 14 zu übertragen, welche das zugeordnete Telegramm bereitgestellt hat. Bei der Kennung kann es sich zum Beispiel um eine Nummer, insbesondere eine Sequenznummer, eine Adresse oder eine Checksumme des Telegramms handeln.

Insbesondere kann die Koordinationseinrichtung 20 auch als Treiber für die Sendeeinrichtung 30 fungieren oder sie kann mit einem in den Figuren nicht näher dargestellten Treiber für die Sendeeinrichtung 30 zusammenwirken.

Außerdem ist die Koordinationseinrichtung 20 dazu ausgebildet, die von den Applikationseinrichtungen 11, 12, 13, 14 bereitgestellten Telegramme zu priorisieren und sie dann gemäß deren Priorität an die Sendeeinrichtung 30 weiterzugeben bzw. die Sendeeinrichtung 30 zu veranlassen, die Telegramme gemäß deren Priorität zu versenden. Das heißt aufgrund der Priorisierung durch die Koordinationseinrichtung 20 werden die Telegramme gegebenenfalls in einer anderen Reihenfolge gesendet als sie von den Applikationseinrichtungen bereitgestellt wurden. Hierzu ist der Koordinationseinrichtung 20 eine Zwischenspeichereinheit zugeordnet, welche in den Figuren jedoch nicht dargestellt ist, in der die zu sendenden Telegramme zunächst zwischengespeichert und dann bewertet bzw. priorisiert können könne. Dabei kann die Zwischenspeichereinheit zum Beispiel von der Koordinationseinrichtung 20 oder der Sendeeinrichtung 30 umfasst sein, sie kann aber auch anderweitig angeordnet sein.

In der Figur 2 ist ein Kommunikationssystem 50 gemäß einer bevorzugten Ausführungsform der Erfindung rein schematisch dargestellt. Dabei umfasst das Kommunikationssystem 50 ein Übertragungsmedium 55 und drei daran angeschaltete Kommunikationseinrichtungen 60, 70 und 80, von denen die Kommunikationseinrichtung 60 wie zuvor in Verbindung mit Figur 1 erläutert ausgebildet ist. Auf die beiden anderen Kommunikationseinrichtungen 70 und 80 wird später noch genauer eingegangen.

Das Kommunikationssystem 50 ist für eine zyklische Kommunikation gemäß einem Kommunikationsprotokoll ausgebildet, bei dem es sich hier um PROFINET-IRT handelt. Dabei ist die Koordinationseinrichtung 20 der Kommunikationseinrichtung 60 dazu ausgebildet, gemäß diesem Kommunikationsprotokoll zyklisch zu arbeiten und insbesondere die Speichereinheit 32 zyklisch zu vorbestimmten Zeitpunkten auszulesen aber auch die Sendeeinrichtung 30 zyklisch zum Senden eines Telegramms zu veranlassen, sofern ein zu sendendes Telegramm bereitsteht. Ein Zyklus dauert dabei zum Beispiel eine Millisekunde.

Zweckmäßiger Weise ist die Koordinationseinrichtung 20 hier ferner dazu ausgebildet, die Sendeeinrichtung 30 auch dann zu veranlassen, ein weiteres zu sendendes Telegramm zu senden, wenn der aktuelle Sendezeitpunkt aus der Speichereinheit 32 nicht auslesbar war. Dabei ist die Koordinationseinrichtung 20 aber bevorzugt ausgebildet, die Sendeeinrichtung 30 erst nach einer vorbestimmten Zeitspanne bzw. einer vorbestimmten Anzahl von Kommunikationszyklen zu veranlassen, ein weiteres zu sendendes Telegramm zu senden, und während besagter Zeitspanne bzw. Anzahl von Zyklen wiederholt zu versuchen, den aktuellen Sendezeitpunkt aus der Speichereinheit (32) auszulesen. Im Wesentlichen handelt es sich hierbei um einen Timeout-Mechanismus bezüglich des Auslesens der Speichereinheit 32 durch die Koordinationseinrichtung 20. Ferner sind die Applikationseinrichtungen 11, 12, 13 und 14 zweckmäßiger Weise dazu ausgebildet, auf die Übertragung des Sendezeitstempels für ein zu sendendes Telegramm von der Koordinationseinrichtung 20 eine vorbestimmte Zeitspanne zu warten und nach Ablauf dieser Zeitspanne das Telegramm gegebenenfalls erneut bereitzustellen.

Die Applikationseinrichtungen 11, 12, 13 und 14 sind beispielsweise als PTCP-Module bzw. PTCP-Zustandsmaschinen zum Bereitstellen von PTCP-Telegrammen ausgebildet. Wie aus Figur 1 ersichtlich, ist dabei die Applikationseinrichtung 11 als Line-Delay-Request-Protocol-Machine (DELAY_REQ) zum Bereitstellen von Anfragetelegrammen, die Applikationseinrichtung 12 als Line-Delay-Response-Protocol-Machine (DELAY_RES) zum Bereitstellen von Antworttelegrammen, die Applikationseinrichtung 13 als PTCP-Master-Protocol-Machine (SYN_MPSM) zum Bereitstellen von Master-Synchronisationstelegrammen und die Applikationseinrichtung 14 als PTCP-Slave-Protocol-Machine (SYN_SPSM) zum Bereitstellen von Slave-Synchronisationstelegrammen ausgebildet.

Mit der Kommunikationseinrichtung 60 und dem Kommunikationssystem 50 gemäß der Figuren 1 und 2 ist also das PTCP-Protokoll ausführbar, selbst wenn es sich bei der Sendeeinrichtung 30 um einen preisgünstigen Netzwerkcontroller wie den bereits erwähnten "I210" handelt. Selbstverständlich kann die Kommunikationseinrichtung 60 neben der Sendeeinrichtung 30 auch eine Empfangseinrichtung umfassen, die in den Figuren jedoch nicht dargestellt ist. In anderen Ausführungsbeispielen kann die Kommunikationseinrichtung 60 auch eine kombinierte Sende- und Empfangseinrichtung besitzen, welche Teil einer Netzwerkkarte sein können. Die Kommunikationseinrichtung 60 ist daher auch zum Empfangen und Weiterverarbeiten von synchronisiert übertragenen Telegrammen und insbesondere PTCP-Telegrammen ausgebildet.

Die beiden anderen in Figur 2 dargestellten Kommunikationseinrichtungen 70 und 80 können ebenfalls als erfindungsgemäße Kommunikationseinrichtungen und insbesondere ebenso wie die Kommunikationseinrichtung 60 ausgebildet sein. In einem anderen nicht dargestellten Ausführungsbeispiel könnten sie auch auf herkömmliche Weise ausgebildet sein, das hoch genaue Ermitteln und zuverlässige Zuordnen von Sendezeitpunkten zu gesendeten Telegrammen und insbesondere PTCP-Telegrammen zu unterstützen, indem sie beispielsweise spezielle Netzwerkcontroller wie den "ERTEC" von SIEMENS umfassen.

Unter weiterer Bezugnahme auf die Figuren 1 und 2 wird im Folgenden die vorliegende Erfindung am Beispiel von PTCP und PROFINET-IRT noch näher erläutert.
Die vier PTCP-Zustandsmaschinen 11, 12, 13 und 14 sind in der Applikationsschicht 10 der Kommunikationseinrichtung 60 angeordnet. Jede der PTCP-Zustandsmaschinen erzeugt zu sendende PTCP-Telegramme eines bestimmten Typs, wobei die PTCP-Zustandsmaschinen an sich nicht mit der Sendeeinrichtung 30 synchronisiert sind. Gegebenenfalls wartet die jeweilige PTCP-Zustandsmaschine anschließend auch auf ein Antworttelegramm, wie es zum Beispiel bei der Line-Delay-Request-Protocol-Machine 11 der Fall ist, die nach dem Erzeugen eines Line-Delay-Request-Telegramms auf ein Line-Delay-Respone-Telegramm einer Line-Delay-Response-Protocol-Machine einer der anderen Kommunikationseinrichtungen 70 bzw. 80 wartet. Von den PTCP-Zustandsmaschinen 13 und 14 ist zur gleichen Zeit nur die PTCP-Master-Protocol-Machine 13 oder PTCP-Slave-Protocol-Machine 14 aktiv, da gemäß PTCP-Protokoll eine Kommunikationseinrichtung entweder als PTCP-Master oder PTCP-Slave fungiert, so dass nur eine dieser beiden PTCP-Zustandsmaschinen entsprechende Synchronisationstelegramme erzeugt. Es werden also von drei PTCP-Zustandmaschinen, unabhängig und asynchron PTCP-Telegramme erzeugt, so dass also auch drei zu versendende Telegramme gleichzeitig bereitstehen können.

Es sei hier erwähnt, dass PTCP ein Port-zu-Port-Protokoll ist, d.h. ein PTCP-Telegramm wird von einem bestimmten PTCP-Modul eines ersten Teilnehmers an ein entsprechendes PTCP-Modul eines zweiten Teilnehmers übertragen. Das Kommunikationssystem 50 kann dabei ferner so eingerichtet sein, dass der zweite Teilnehmer, z.B. Kommunikationseinrichtung 70, grundsätzlich nur Telegramme des ersten Teilnehmers, z.B. Kommunikationseinrichtung 60, empfangen kann und/oder dass der zweite Teilnehmer grundsätzlich nur Telegramme an den ersten Teilnehmers senden kann. Somit ist die in Figur 2 gezeigte Darstellung eines Kommunikationssystems 50 rein schematisch, die physisch und/oder logische Netzwerkstruktur bzw. -topologie kann jedoch davon abweichen.

Die PTCP-Zustandsmaschinen 11, 12, 13 oder 14 übergeben ihre zu sendenden Telegramme an die Koordinationseinrichtung 20. Das Versenden der PTCP-Telegramme erfolgt aber nicht genau zu dem Zeitpunkt, zu dem die jeweilige PTCP-Zustandsmaschine ihr Telegramm an die Koordinationseinrichtung 20 übergibt. Vielmehr kann das Senden nur während vorbestimmter Zeitabschnitte des protokollspezifischen Kommunikationszyklus erfolgen, so dass die PTCP-Telegramme zunächst zwischengespeichert werden müssen.

Bekanntermaßen ist der Kommunikations- bzw. Übertragungszyklus bei PROFINET-IRT unterteilt in verschiedene Phasen, die für bestimmte Kommunikationsarten reserviert sind. Dies sind insbesondere eine sogenannte rote Phase (engl.: red period) für isochrone Kommunikation und eine grüne Phase (engl.: green period) für sonstige Kommunikation, während der alle anderen Telegramme übertragen werden. Ferner gibt es eine gelbe Phase (engl.: yellow period), die den Übergang von der grünen zur roten Phase bildet und während der nur noch Telegramme versendet werden dürfen, die garantiert bis zum Start der roten Phase übertragen werden können.

Für PTCP-Telegramme ist im Fall von PROFINET-IRT zum Beispiel in der grünen Phase (engl.: green period) jedes Zyklusses ein bestimmter Zeitabschnitt reserviert, nur dann können PTCP-Telegramme übertragen werden, wobei pro Zyklus nur ein PTCP-Telegramm versendet werden kann.

Die Koordinationseinrichtung 20 kann zyklisch gemäß dem PROFINET-IRT-Protokoll arbeiten. Dabei prüft sie während jeder roten Phase zum einen, ob wenigstens ein PTCP-Telegramm bereitsteht, das in der anschließenden grünen Phase zu versenden wäre, und zum anderen, ob in der Speichereinheit 32 der Sendeeinrichtung 30 ein Sendezeitpunkt ausgelesen werden kann, der zu einem während der grünen Phase des vorhergehenden Zyklusses versendeten PTCP-Telegramm von der Zeitstempeleinheit 31 ermittelt wurde.

Die PTCP-Telegramme werden also zunächst
zwischengespeichert und von der Koordinationseinrichtung 20 für das Versenden während der nächsten grünen Phase bzw. einer der nächsten grünen Phasen des Kommunikationszyklus geplant bzw. vorgesehen. Außerdem kann die Koordinationseinrichtung 20 die zu sendenden PTCP-Telegramme bezüglich der Sendereihenfolge priorisieren. Das Line-Delay-Request-Telegramm der Zustandmaschine 11 hat dabei zum Beispiel vor dem Line-Delay-Response-Telegramm der Zustandsmaschine 12 Vorrang.

Es werden nun drei beispielhafte Szenarien des Sendens von PTCP-Telegrammen und des Ermittelns von Sendezeitpunkten beschrieben. Die gelbe Phase des PROFINET-IRT-Kommunikationszyklus wird dabei zur Vereinfachung und besseren Nachvollziehbarkeit nicht berücksichtigt.

Ein erstes Szenario betrifft das Senden eines Line-Delay-Request-Telegramms und eines Line-Delay-Response-Telegramms durch die Kommunikationseinrichtung 60, wobei diese PTCP-Telegramme hier unabhängig voneinander sind, da sich das Line-Delay-Response-Telegramm auf ein Line-Delay-Request-Telegramm einer anderen Kommunikationseinrichtung, etwa der Kommunikationseinrichtung 70 bezieht. Es wird also erst ein Line Delay Request Telegramm von der PTCP-Zustandsmaschine 11 erzeugt und an die Koordinationseinrichtung 20 übergeben. Unabhängig davon wird wenig später ein Line Delay Response Telegramm von der PTCP-Zustandsmaschine 12 erzeugt und der Koordinationseinrichtung 20 übergeben.

Hier findet die Koordinationseinrichtung 20 während der roten Phase eines ersten Kommunikationszyklus das zuerst bereitgestellte Line-Delay-Request-Telegramm, welches sie während der grünen Phase des ersten Kommunikationszyklus an die Sendeeinrichtung 30 weitergibt und die Sendeeinrichtung veranlasst bzw. ansteuert, das Line-Delay-Request-Telegramm zu versenden. Ebenfalls während dieser grünen Phase ermittelt die Zeitstempeleinheit 31 der Sendeeinrichtung den Sendezeitpunkt und schreibt diesen in die Speichereinheit 32. Während der roten Phase des zweiten Kommunikationszyklus findet die Koordinationseinrichtung 20 das von der PTCP-Zustandsmaschine 12 zum Versenden bereitgestellte Line-Delay-Response-Telegramm. Während dieser roten Phase findet die Koordinationseinrichtung 20 in der Speichereinheit 32 auch den Sendezeitpunkt für das während der grünen Phase des ersten Kommunikationszyklus versendete Line-Delay-Request-Telegramm, den sie ausliest, dem Telegramm zuordnet und das Ergebnis für die PTCP-Zustandsmaschine 11 bereitstellt, welche das Ergebnis dann auslesen kann. Während der grünen Phase des zweiten Kommunikationszyklus gibt die Koordinationseinrichtung 20 das Line Delay Response Telegramm an die Sendeeinrichtung 30 weiter und veranlasst diese, das Telegramm zu versenden und den Sendezeitpunkt mittels der Zeitstempeleinheit 31 zu ermitteln und zu speichern. Während der roten Phase des dritten Kommunikationszyklus liest die Koordinationseinrichtung 20 den Sendezeitpunkt dann aus der Speichereinheit 32 aus, ordnet ihn dem Line-Delay-Response-Telegramm zu und stellt das Ergebnis der PTCP-Zustandsmaschine 12 bereit, welche das Ergebnis dann auslesen kann.

Ein zweites Szenario betrifft das Senden eines Line-Delay-Request-Telegramms und eines Line-Delay-Response-Telegramms mit Priorisierung der Telegramme. Dabei sind diese PTCP-Telegramme wie im ersten Szenario wieder unabhängig voneinander. Allerdings werden sie im Unterschied zum ersten Szenario im Wesentlichen gleichzeitig von der PTCP-Zustandsmaschine 11 bzw. der PTCP-Zustandsmaschine 12 erzeugt und der Koordinationseinrichtung 20 übergeben. Gemäß einer Voreinstellung priorisiert die Koordinationseinrichtung 20 von den bereitstehenden zu versenden PTCP-Telegrammen das Line-Delay-Request-Telegramm und bearbeitet dieses während eines ersten Kommunikationszyklus, wobei das Line-Delay-Response-Telegramm bis zu dessen Bearbeitung während eines zweiten Kommunikationszyklus zwischengespeichert wird.

Ein drittes Szenario betrifft das Senden eines PTCP-Master-Synchronisationstelegramms, eines Line-Delay-Request-Telegramms und eines Line-Delay-Response-Telegramms mit Priorisierung der Telegramme. Dabei sind diese PTCP-Telegramme wiederum unabhängig voneinander. Wie im zweiten Szenario werden das Line-Delay-Request-Telegramm das Line-Delay-Response-Telegramm im Wesentlichen gleichzeitig von der PTCP-Zustandsmaschine 11 bzw. der PTCP-Zustandsmaschine 12 erzeugt und der Koordinationseinrichtung 20 übergeben. Wenig später wird aber ein PTCP-Master-Synchronisationstelegramms von der PTCP-Zustandsmaschine 13 erzeugt und zum Versenden der Koordinationseinrichtung 20 übergeben.

Wie im zweiten Szenario priorisiert die Koordinationseinrichtung 20 gemäß einer Voreinstellung von den beiden bereitstehenden zu versenden PTCP-Telegrammen das Line-Delay-Request-Telegramm und bearbeitet dieses während eines ersten Kommunikationszyklus, wobei das Line-Delay-Response-Telegramm zwischengespeichert wird. Während der roten Phase des zweiten Kommunikationszyklus findet die Koordinationseinrichtung 20 außer dem Line-Delay-Response-Telegramm auch das inzwischen zum Versenden bereitstehende PTCP-Master-Synchronisationstelegramm. Da gemäß einer weiteren Voreinstellung für das PTCP-Master-Synchronisationstelegramm die höchste Priorität gilt, wird von den beiden bereitstehenden zu versenden PTCP-Telegrammen das PTCP-Master-Synchronisationstelegramm in dem zweiten Kommunikationszyklus bearbeitet, wobei das Line-Delay-Response-Telegramm weiterhin bis zu dessen Bearbeitung während eines dritten Kommunikationszyklus zwischengespeichert wird.

Da anders als bei einem Line-Delay-Request-Telegramm und Line-Delay-Response-Telegramm bei einem PTCP-Master-Synchronisationstelegramms wie auch bei einem PTCP-Slave-Synchronisationstelegramm der Sendezeitpunkt zwar ermittelt aber nicht zurückgelesen werden muss, sondern direkt in das Telegramm eingeschrieben und mit diesem versendet wird, kann während der roten Phase des dritten Kommunikationszyklus das Auslesen der Speichereinheit 32 durch die Koordinationseinrichtung 20 entfallen. Die Koordinationseinrichtung 20 ist hier dementsprechend ausgebildet, nach Veranlassen des Sendens eines PTCP-Master-Synchronisationstelegramms oder eines PTCP-Slave-Synchronisationstelegramms keinen Sendezeitpunkt in der Speichereinheit 32 zu erwarten.

Eine weitere Besonderheit der PTCP-Master-Synchronisationstelegramme bzw. PTCP-Slave-Synchronisationstelegramme gegenüber den Line-Delay-Request-Telegrammen und Line-Delay-Response-Telegrammen besteht darin, dass sie von der jeweiligen Zustandsmaschine 13 bzw. 14 nur einmal erzeugt und an die Koordinationseinrichtung 20 übergeben werden müssen. Die Koordinationseinrichtung 20 ist dann zweckmäßiger Weise ausgebildet, dieses Telegramm gewissermaßen als Vorlage zu speichern und automatisch in einem vorbestimmbaren Zyklus, insbesondere gemäß der PROFINET-Spezifikation, von zum Beispiel 30 Millisekunden ein entsprechendes PTCP-Master-Synchronisationstelegramm bzw. PTCP-Slave-Synchronisationstelegramm an die Sendeeinrichtung 30 weiter zu geben und die Sendeeinrichtung zu veranlassen bzw. anzusteuern, das jeweilige Sychronisationstelegramm zu versenden, wobei die Koordinationseinrichtung diesen Vorgang bevorzugt solange wiederholt, bis er von der PTCP-Zustandsmaschine 13 bzw. 14 aktiv gestoppt wird.

Abschließend noch einmal allgemeiner formuliert, umfasst das erfindungsgemäße Verfahren zum synchronisierten Senden von Telegrammen also die folgenden Schritte:
a) Bereitstellen, in einer Kommunikationseinrichtung 60, von wenigstens zwei Telegrammen, welche synchronisiert gesendet werden sollen;
b) Übergeben der Telegramme an eine Sendeeinrichtung 30 der Kommunikationseinrichtung 60, wobei die Sendeeinrichtung Teil eines Netzwerkcontrollers sein kann;
c) Senden des einen Telegramms von der Sendeeinrichtung 30 beispielsweise über das Übertragungsmedium 55 zur Ziel-Kommunikationseinrichtung 70 oder 80;
d) Erzeugen, in der Sendeeinrichtung 30, eines Sendezeitpunktes für das eine Telegramm;
e) Speichern des Sendezeitpunktes in der Sendeeinrichtung 30, welche nur einen einzigen Sendezeitpunkt speichern kann, wobei die Speichereinrichtung 30 Teil des Netzwerkcontrollers sein kann;
f) Auslesen des gespeicherten Sendezeitpunktes und
g) Zuordnen des ausgelesenen Sendezeitpunktes zu dem einen Telegramm und Ablegen der Zuordnung in der Kommunikationseinrichtung 60;
h) nach dem Auslesen des Sendezeitpunktes Wiederholen der Schritte c) bis g), wobei
in Schritt c) das andere Telegramm gesendet wird,
in Schritt d) ein Sendezeitpunkt für das andere Telegramm erzeugt wird,
in Schritt e) der Sendezeitpunkt in der Sendeeinrichtung 30 gespeichert wird,
in Schritt f) der gespeicherte Sendezeitpunkt ausgelesen wird, und
in Schritt g) der ausgelesene Sendezeitpunkt dem einen anderen Telegramm zugeordnet wird und die Zuordnung in der Kommunikationseinrichtung 60 abgelegt wird.

Je nach Anwendungsfall können in Schritt a) die Telegramme im Wesentlichen asynchron und insbesondere einer ersten und/oder zweiten Applikationseinrichtung 11, 12, 13, 14 bereitgestellt werden, wobei in Schritt g) der jeweilige Sendezeitpunkt und eine Kennung des dem jeweiligen Sendezeitpunkt zugeordneten Telegramms an die Applikationseinrichtung, welche das zugeordnete Telegramm bereitgestellt hat, übergeben werden.

Ferner kann bevorzugt vorgesehen sein, dass in Schritt b) die Telegramme zunächst an eine Koordinationseinrichtung 20 der Kommunikationseinrichtung 60 und von dieser an die Sendeeinrichtung 30 übergeben werden und/oder dass die Schritte f) und g) durch eine Koordinationseinrichtung 20 gesteuert werden.

Es versteht sich, dass der Schritt h) für jedes weitere Telegramm, das synchronisiert gesendet werden soll, durchgeführt werden kann und bevorzugt durchgeführt wird. Insbesondere werden die Schritte c) bis g) gemäß einem Kommunikationsprotokoll zyklisch durchgeführt.

Schließlich kann es auch vorgesehen sein, dass in Schritt b) die Telegramme priorisiert werden, und in Schritt b) das Übergeben der Telegramme und/oder in Schritt c) das Senden der Telegramme gemäß deren Priorität gesteuert wird.

### Bezugszeichenliste

- 10: Applikationsumgebung
- 11: Applikationseinrichtung
- 12: Applikationseinrichtung
- 13: Applikationseinrichtung
- 14: Applikationseinrichtung
- 20: Koordinationseinrichtung
- 30: Sendeeinrichtung
- 31: Zeitstempeleinheit
- 32: Speichereinheit
- 50: Kommunikationssystem
- 55: Übertragungsmedium
- 60: Kommunikationseinrichtung
- 70: Kommunikationseinrichtung
- 80: Kommunikationseinrichtung

## Patentansprüche

1. Kommunikationseinrichtung (60) zum synchronisierten Senden von Telegrammen, umfassend
eine Sendeeinrichtung (30), die eine Zeitstempeleinheit (31) und eine Speichereinheit (32) aufweist, wobei die Speichereinheit (32) dazu ausgebildet ist, nur den aktuellen, von der Zeitstempeleinheit ermittelten Sendezeitpunkt zu speichern,
**gekennzeichnet durch**
- wenigstens zwei Applikationseinrichtungen (11, 12, 13, 14), die jeweils dazu ausgebildet sind, wenigstens ein Telegramm bereitzustellen, wobei diese wenigstens zwei Telegramme synchronisiert gesendet werden sollen,
- eine Koordinationseinrichtung (20), die dazu ausgebildet ist, die von den Applikationseinrichtungen (11, 12, 13, 14) bereitgestellten Telegramme in vorbestimmbarer Weise an die Sendeeinrichtung (30) weiterzugeben und die Sendeeinrichtung zum Senden der zu sendenden Telegramme zu veranlassen,
wobei die Zeitstempeleinheit (31) dazu ausgebildet ist, zu jedem versandten Telegramm, welches von einer der beiden Applikationseinrichtungen (11, 12, 13, 14) bereitgestellt wurde, einen aktuellen Sendezeitpunkt zu ermitteln, und
wobei die Koordinationseinrichtung (20) ferner dazu ausgebildet ist, den aktuellen Sendezeitpunkt aus der Speichereinheit (32) auszulesen und dem jeweiligen Telegramm zuzuordnen, und die Sendeeinrichtung (30) erst dann zu veranlassen, ein weiteres zu sendendes Telegramm zu senden, wenn der aktuelle Sendezeitpunkt von der Koordinationseinrichtung (20) aus der Speichereinheit (32) ausgelesen worden ist.

2. Kommunikationseinrichtung (60) gemäß Anspruch 1,
wobei die Koordinationseinrichtung (20) dazu ausgebildet ist, den jeweiligen Sendezeitpunkt und eine Kennung des dem jeweiligen Sendezeitpunkt zugeordneten Telegramms an der Applikationseinrichtung (11, 12, 13, 14) bereit zu stellen, welche das zugeordnete Telegramm bereitgestellt hat.

3. Kommunikationseinrichtung (60) gemäß einem der
Ansprüche 1 oder 2,
wobei die Koordinationseinrichtung (20) dazu ausgebildet ist, gemäß einem Kommunikationsprotokoll zyklisch zu arbeiten und insbesondere ausgebildet ist, die Speichereinheit (32) zyklisch zu vorbestimmten Zeitpunkten auszulesen.

4. Kommunikationseinrichtung (60) gemäß einem der
Ansprüche 1 bis 3,
wobei wenigstens eine der Applikationseinrichtungen (11, 12, 13, 14) als eine Zustandsmaschine ausgebildet ist und dazu ausgebildet ist, wenigstens ein zu sendendes Telegramm gemäß dem Precision Transparent Clock Protocol bereitzustellen.

5. Kommunikationseinrichtung (60) gemäß einem der
Ansprüche 1 bis 4,
wobei die Applikationseinrichtungen (11, 12, 13, 14) dazu ausgebildet sind, Telegramme zeitlich unabhängig voneinander bereitzustellen.

6. Kommunikationseinrichtung (60) gemäß einem der
Ansprüche 1 bis 5,
wobei die Koordinationseinrichtung (20) dazu ausgebildet ist, die von den Applikationseinrichtungen (11, 12, 13, 14) bereitgestellten Telegramme zu priorisieren.

7. Kommunikationseinrichtung (60) gemäß Anspruch 6,
wobei die Koordinationseinrichtung (20) dazu ausgebildet ist, die Telegramme gemäß deren Priorität an die Sendeeinrichtung (30) weiterzugeben und/oder die Sendeeinrichtung (30) zu veranlassen, die Telegramme gemäß deren Priorität zu versenden.

8. Kommunikationseinrichtung (60) gemäß einem der
Ansprüche 1 bis 7,
wobei die Koordinationseinrichtung (20) dazu ausgebildet ist, die Sendeeinrichtung (30) auch dann zu veranlassen, ein weiteres zu sendendes Telegramm zu senden, wenn der aktuelle Sendezeitpunkt von der Koordinationseinrichtung (20) aus der Speichereinheit (30), insbesondere nach einer vorbestimmten Zeitspanne oder einer vorbestimmten Anzahl von Zyklen, nicht auslesbar war.

9. Kommunikationssystem (50) umfassend
ein Übertragungsmedium (55) und wenigstens eine an das Übertragungsmedium angeschaltete Kommunikationseinrichtung (60) gemäß einem der Ansprüche 1 bis 8.

10. Kommunikationssystem (50) gemäß Anspruch 9, ausgebildet für eine zyklische Kommunikation gemäß einem Kommunikationsprotokoll und insbesondere gemäß PROFINET-RT oder PROFINET-IRT.

11. Verfahren zum synchronisierten Senden von Telegrammen, insbesondere mittels einer Kommunikationseinrichtung (60) gemäß einem der Ansprüche 1 bis 8, umfassend die Schritte:
a) Bereitstellen, in einer Kommunikationseinrichtung (60), von wenigstens zwei Telegrammen, welche synchronisiert gesendet werden sollen;
b) Übergeben der Telegramme an eine Sendeeinrichtung (30) der Kommunikationseinrichtung (60);
c) Senden des einen Telegramms von der Sendeeinrichtung (30);
d) Erzeugen, in der Sendeeinrichtung (30), eines Sendezeitpunktes für das eine Telegramm;
e) Speichern des Sendezeitpunktes in der Sendeeinrichtung (30), welche nur einen einzigen Sendezeitpunkt speichern kann;
f) Auslesen des gespeicherten Sendezeitpunktes und
g) Zuordnen des ausgelesenen Sendezeitpunktes zu dem einen Telegramm und Ablegen der Zuordnung in der Kommunikationseinrichtung (60);
h) nach dem Auslesen des Sendezeitpunktes, dem Zuordnen des ausgelesenen Sendezeitpunktes zu dem einen Telegramm und dem Ablegen der Zuordnung in der Kommunikationseinrichtung (60) Wiederholen der Schritte c) bis g), wobei
in Schritt c) das andere Telegramm gesendet wird,
in Schritt d) ein Sendezeitpunkt für das andere Telegramm erzeugt wird,
in Schritt e) der Sendezeitpunkt in der Sendeeinrichtung (30) gespeichert wird,
in Schritt f) der gespeicherte Sendezeitpunkt ausgelesen wird, und
in Schritt g) der ausgelesene Sendezeitpunkt dem einen anderen Telegramm zugeordnet wird und die Zuordnung in der Kommunikationseinrichtung (60) abgelegt wird.

12. Verfahren gemäß Anspruch 11,
wobei in Schritt a) die Telegramme asynchron bereitgestellt werden.

13. Verfahren gemäß einem der Ansprüche 11 oder 12,
wobei in Schritt b) die Telegramme zunächst an eine Koordinationseinrichtung (20) der Kommunikationseinrichtung (60) und von dieser an die Sendeeinrichtung (30) übergeben werden.

14. Verfahren gemäß einem der Ansprüche 11 bis 13, wobei die Schritte f) und g) durch eine Koordinationseinrichtung (20) gesteuert werden.

15. Verfahren gemäß einem der Ansprüche 11 bis 14,
wobei der Schritt h) für jedes weitere Telegramm, das synchronisiert gesendet werden soll, durchgeführt wird.

16. Verfahren gemäß einem der Ansprüche 11 bis 15,
wobei in Schritt a) die Telegramme von einer ersten und/oder zweiten Applikationseinrichtung (11, 12, 13, 14) bereitgestellt werden, und
wobei in Schritt g) der jeweilige Sendezeitpunkt und eine Kennung des dem jeweiligen Sendezeitpunkt zugeordneten Telegramms an der Applikationseinrichtung, welche das zugeordnete Telegramm bereitgestellt hat, bereitgestellt werden.

17. Verfahren gemäß einem der Ansprüche 11 bis 16,
wobei zumindest die Schritte c) bis g) gemäß einem Kommunikationsprotokoll zyklisch durchgeführt werden.

18. Verfahren gemäß einem der Ansprüche 11 bis 17,
wobei in Schritt b) die Telegramme priorisiert werden, und
wobei in Schritt b) das Übergeben der Telegramme und/oder in Schritt c) das Senden der Telegramme gemäß deren Priorität gesteuert wird.

## Claims

1. A communication device (60) for synchronized transmission of messages, comprising:
a transmission device (30) including a time stamp unit (31) and a memory unit (32), wherein the memory unit (32) is adapted to store only the current transmission time determined by the time stamp unit;
**characterized by**
- at least two application devices (11, 12, 13, 14), each one adapted to provide at least one telegram, wherein said at least two telegrams are to be sent in synchronized manner;
- a coordination device (20) adapted to forward, in predetermined manner, the telegrams provided by the application devices (11, 12, 13, 14) to the transmission device (30), and to prompt the transmission device to transmit the telegrams to be sent;
wherein the time stamp unit (31) is adapted to determine a current transmission time for each transmitted telegram which was provided by one of the at least two application devices (11, 12, 13, 14); and
wherein the coordination device (20) is further adapted to read out the current transmission time from the memory unit (32) and to associate it with the corresponding telegram, and to prompt the transmission device (30) to transmit a further telegram to be sent only when the current transmission time has been read out from the memory unit (32) by the coordination device (20) .

2. The communication device (60) according to claim 1, wherein the coordination device (20) is adapted to supply the respective transmission time and an identification of the telegram associated with the respective transmission time to the application device (11, 12, 13, 14) which provided the associated telegram.

3. The communication device (60) according to any one of claims 1 or 2, wherein the coordination device (20) is adapted to operate cyclically in accordance with a communication protocol, and is in particular adapted to cyclically read out the memory unit (32) at predetermined times.

4. The communication device (60) according to any one of claims 1 to 3, wherein at least one of the application devices (11, 12, 13, 14) is a state machine and is adapted to provide at least one telegram to be sent in accordance with Precision Transparent Clock Protocol.

5. The communication device (60) according to any one of claims 1 to 4, wherein the application devices (11, 12, 13, 14) are adapted to provide telegrams temporally independently of each other.

6. The communication device (60) according to any one of claims 1 to 5, wherein the coordination device (20) is adapted to prioritize the telegrams provided by the application devices (11, 12, 13, 14).

7. The communication device (60) according to claim 6, wherein the coordination device (20) is adapted to forward the telegrams to the transmission device (30) according to the priority thereof, and/or to prompt the transmission device (30) to transmit the telegrams according to the priority thereof.

8. The communication device (60) according to any one of claims 1 to 7, wherein the coordination device (20) is adapted to prompt the transmission device (30) to transmit a further telegram to be sent even if the coordination device (20) failed to read out the current transmission time from the memory unit (30), in particular after a predetermined time period or a predetermined number of cycles.

9. A communication system (50), comprising
a transmission medium (55) and at least one communication device (60) according to any one of claims 1 to 8 connected to said transmission medium.

10. The communication system (50) according to claim 9,
configured for cyclic communication in accordance with a communication protocol and in particular in accordance with PROFINET RT or PROFINET IRT.

11. A method for synchronized transmission of telegrams, in particular using a communication device (60) according to any one of claims 1 to 8, comprising the steps of:
a) providing, in a communication device (60), at least two telegrams which are to be sent in synchronized manner;
b) forwarding the messages to a transmission device (30) of the communication device (60);
c) transmitting one of the telegrams, by the transmission device (30);
d) generating, in the transmission device (30), a transmission time for said one telegram;
e) storing the transmission time in the transmission device (30) which can only store a single transmission time;
f) reading out the stored transmission time; and
g) associating the read-out transmission time with said one telegram and storing the association in the communication device (60);
h) once the transmission time has been read out, the read-out transmission time has been associated with said one telegram, and the association has been stored in the communication device (60), repeating steps c) to g); wherein
in step c) the other telegram is transmitted;
in step d) a transmission time is generated for said other telegram;
in step e) the transmission time is stored in the transmission device (30);
in step f) the stored transmission time is read out; and
in step g) the read-out transmission time is associated with said other telegram and the association is stored in the communication device (60).

12. The method according to claim 11,
wherein in step a) the telegrams are provided asynchronously.

13. The method according to any one of claims 11 or 12,
wherein in step b) the telegrams are first forwarded to a coordination device (20) of the communication device (60) and from there to the transmission device (30).

14. The method according to any one of claims 11 to 13,
wherein steps f) and g) are controlled by a coordination device (20).

15. The method according to any one of claims 11 to 14,
wherein step h) is performed for each further telegram that is to be sent in synchronized manner.

16. The method according to any one of claims 11 to 15,
wherein in step a) the telegrams are provided by a first and/or second application device (11, 12, 13, 14); and wherein in step g) the respective transmission time and an identification of the telegram associated with the respective transmission time are provided to the application device which provided the associated message.

17. The method according to any one of claims 11 to 16,
wherein at least steps c) to g) are performed cyclically in accordance with a communication protocol.

18. The method according to any one of claims 11 to 17,
wherein in step b) the telegrams are prioritized; and wherein the forwarding of the telegrams in step b) and/or the transmitting of the telegrams in step c) is controlled according to the priority thereof.

## Revendications

1. Dispositif de communication (60) pour l'émission synchronisée de télégrammes, comprenant :
un dispositif d'émission (30), qui comprend une unité d'horodatage (31) et une unité mémoire (32), l'unité mémoire (32) étant conçue pour ne mettre en mémoire que le moment d'émission actuel déterminé par l'unité d'horodatage,
**caractérisé par** :
- au moins deux dispositifs d'application (11, 12, 13, 14), qui sont chacun conçus pour fournir au moins un télégramme, cesdits au moins deux télégrammes devant être envoyés de façon synchronisée,
- un dispositif de coordination (20), qui est conçu pour transmettre les télégrammes fournis par les dispositifs d'application (11, 12, 13, 14) d'une façon pouvant être prédéfinie au dispositif d'émission (30) et pour amener le dispositif d'émission à envoyer les télégrammes à envoyer,
dans lequel l'unité d'horodatage (31) est conçue pour déterminer un moment d'émission actuel pour chaque télégramme envoyé, lequel a été fourni par un des deux dispositifs d'application (11, 12, 13, 14), et
dans lequel le dispositif de coordination (20) est conçu en outre pour consulter le moment d'émission actuel dans l'unité mémoire (32) et pour l'associer au télégramme respectif, et pour n'amener le dispositif d'émission (30) à envoyer un autre télégramme à envoyer que lorsque le moment d'émission actuel a été consulté dans l'unité mémoire (32) par le dispositif de coordination (20).

2. Dispositif de communication (60) selon la revendication 1, dans lequel le dispositif de coordination (20) est conçu pour fournir le moment d'émission respectif et une identification du télégramme associé au moment d'émission respectif au dispositif d'application (11, 12, 13, 14), lequel a fourni le télégramme associé.

3. Dispositif de communication (60) selon l'une quelconque des revendications 1 et 2, dans lequel le dispositif de coordination (20) est conçu pour fonctionner de manière cyclique selon un protocole de communication et est conçu en particulier pour consulter l'unité mémoire (32) de manière cyclique aux moments prédéfinis.

4. Dispositif de communication (60) selon l'une quelconque des revendications 1 à 3, dans lequel au moins l'un des dispositifs d'application (11, 12, 13, 14) est réalisé sous la forme d'une machine à états finis et est conçu pour fournir au moins un télégramme à envoyer conformément au protocole PTCP (Précision Transparent Clock Protocol).

5. Dispositif de communication (60) selon l'une quelconque des revendications 1 à 4, dans lequel les dispositifs d'application (11, 12, 13, 14) sont conçus pour fournir des télégrammes dans le temps indépendamment les uns des autres.

6. Dispositif de communication (60) selon l'une quelconque des revendications 1 à 5, dans lequel le dispositif de coordination (20) est conçu pour prioriser les télégrammes fournis par les dispositifs d'application (11, 12, 13, 14).

7. Dispositif de communication (60) selon la revendication 6, dans lequel le dispositif de coordination (20) est conçu pour transmettre les télégrammes au dispositif d'émission (30) en fonction de leur priorité et/ou pour amener le dispositif d'émission (30) à envoyer les télégrammes en fonction de leur priorité.

8. Dispositif de communication (60) selon l'une quelconque des revendications 1 à 7, dans lequel le dispositif de coordination (20) est conçu pour amener également le dispositif d'émission (30) à envoyer un autre télégramme à envoyer lorsque le moment d'émission actuel ne pouvait pas être consulté par le dispositif de coordination (20) dans l'unité mémoire (30), en particulier après un laps de temps prédéfini ou un nombre prédéfini de cycles.

9. Système de communication (50) comprenant :
un support de transmission (55) et au moins un dispositif de communication (60) selon l'une quelconque des revendications 1 à 8 branché au support de transmission.

10. Système de communication (50) selon la revendication 9, conçu pour une communication cyclique conformément à un protocole de communication et en particulier conformément à PROFINET-RT OU à PROFINET-IRT.

11. Procédé d'émission synchronisée de télégrammes, en particulier au moyen d'un dispositif de communication (60) selon l'une quelconque des revendications 1 à 8, comprenant les étapes suivantes :
a) fournir, dans un dispositif de communication (60), au moins deux télégrammes, lesquels doivent être envoyés de manière synchronisée ;
b) transférer les télégrammes à un dispositif d'émission (30) du dispositif de communication (60) ;
c) envoyer l'un des télégrammes au moyen du dispositif d'émission (30) ;
d) générer, dans le dispositif d'émission (30), un moment d'émission pour l'un des télégrammes ;
e) mettre en mémoire le moment d'émission dans le dispositif d'émission (30), lequel ne peut mettre en mémoire qu'un seul moment d'émission ;
f) consulter le moment d'émission mis en mémoire et
g) associer le moment d'émission consulté à l'un des télégrammes et mettre en mémoire l'association dans le dispositif de communication (60) ;
h) une fois le moment d'émission consulté, le moment d'émission consulté associé à l'un des télégrammes et l'association mise en mémoire dans le dispositif de communication (60), répéter les étapes c) à g), où :
à l'étape c), l'autre télégramme est envoyé,
à l'étape d), un moment d'émission pour l'autre télégramme est généré,
à l'étape e), le moment d'émission est mis en mémoire dans le dispositif d'émission (30),
à l'étape f), le moment d'émission mis en mémoire est consulté, et
à l'étape g), le moment d'émission consulté est associé à un autre télégramme et l'association est mise en mémoire dans le dispositif de communication (60).

12. Procédé selon la revendication 11, dans lequel, à l'étape a), les télégrammes sont fournis de manière asynchrone.

13. Procédé selon l'une quelconque des revendications 11 et 12, dans lequel, à l'étape b), les télégrammes sont tout d'abord transmis à un dispositif de coordination (20) du dispositif de communication (60) et dudit dispositif de coordination au dispositif d'émission (30).

14. Procédé selon l'une quelconque des revendications 11 à 13, dans lequel les étapes f) et g) sont commandées par un dispositif de coordination (20).

15. Procédé selon l'une quelconque des revendications 11 à 14, dans lequel l'étape h) est réalisée pour chaque autre télégramme devant être envoyé de manière synchronisée.

16. Procédé selon l'une quelconque des revendications 11 à 15,
dans lequel, à l'étape a), les télégrammes sont fournis par un premier et/ou deuxième dispositif d'application (11, 12, 13, 14), et
dans lequel, à l'étape g), le moment d'émission respectif et une identification du télégramme associé au moment d'émission respectif sont fournis au dispositif d'application, lequel a fourni le télégramme associé.

17. Procédé selon l'une quelconque des revendications 11 à 16, dans lequel au moins les étapes c) à g) sont réalisées de manière cyclique selon un protocole de communication.

18. Procédé selon l'une quelconque des revendications 11 à 17,
dans lequel, à l'étape b), les télégrammes sont priorisés, et
dans lequel, à l'étape b), le transfert des télégrammes et/ou, à l'étape c) l'émission des télégrammes sont commandés en fonction de leur priorité.
